Europäisches Patentamt

European Patent Office

Office européen des brevets

(19)

(11) Veröffentlichungsnummer: **0 307 669**

**A2**

(12) # EUROPÄISCHE PATENTANMELDUNG

(21) Anmeldenummer: 88113760.8

(22) Anmeldetag: 24.08.88

(51) Int. Cl.⁴: **C01F 7/00 , C01F 7/48**

(30) Priorität: 18.09.87 DE 3731456

(43) Veröffentlichungstag der Anmeldung:
22.03.89 Patentblatt 89/12

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Peters, Dieter, Dr.**
**Schaesbergstrasse 3**
**D-5030 Hürth(DE)**

(54) **Verfahren zur Herstellung von Amminsalzen des Aluminiumjodids.**

(57) Es wird ein Verfahren zur Herstellung von Amminsalzen des Aluminiumjodids durch Umsetzung von
Aluminium, einer Jodverbindung und Ammoniak angegeben, bei dem die Reaktanten ohne Quecksilber
als Katalysator in flüssiger Ammoniakphase bei einer
Temperatur von 20 bis 600°C und einem Druck von
8 bis 2 000 bar umgesetzt werden und überschüssiges Ammoniak nach Beendigung der Umsetzung
verdampft wird.

Das Verfahren gestattet die Herstellung von Hexaamminaluminiumjodidmonoammoniakat, Hexaamminaluminiumjodid und Pentaamminaluminiumjodid.

EP 0 307 669 A2

## Verfahren zur Herstellung von Amminsalzen des Aluminiumjodids

Die vorliegende Erfindung betrifft ein Verfahren zur Herstellung von Amminsalzen des Aluminiumjodids, insbesondere des Hexaamminaluminiumjodidmonoammoniakats, des Hexaamminaluminiumjodids und Pentaamminaluminiumjodids, durch Umsetzung von Aluminium, einer Jodverbindung und Ammoniak.

Untersuchungen über Amminsalze von Aluminiumjodid sind von G.W. Watt und J.H. Braun im J.Am. Chem. Soc. Bd 78 (1956) Seiten 5494 - 5496 beschrieben. Es wurde gefunden, daß $AlI_3 \cdot 20NH_3$ oberhalb von $-26\,°C$ unbeständig ist. Wenn $AlI_3 \cdot 20NH_3$ bei Unterdruck erwärmt wird, bilden sich schließlich bei $25\,°C$ und $10^{-3}$ bar weiße Kristalle von $AlI_3 \cdot 6NH_3$. Das $AlI_3 \cdot 6NH_3$ kann im Vakuum zum $AlI_3 \cdot 5NH_3$ überführt werden.

In dieser Arbeit ist auf Seite 5495 referiert, daß Aluminium mit Jod und Ammoniak nur dann miteinander reagieren, wenn Quecksilber als Katalysator zugefügt ist.

Die Aufgabe der vorliegenden Erfindung ist es, ein Verfahren zur Herstellung der Amminsalze des Aluminiumjodids aus Aluminium, einer Jodverbindung und Ammoniak ohne Quecksilberkatalysator in hoher Reinheit und kristallinem Zustand sowie als Einkristall anzugeben.

Überraschend konnte die Aufgabe gelöst werden, indem Aluminium, eine Jodverbindung und Ammoniak in flüssiger Ammoniakphase bei einer Temperatur von 20 bis $600\,°C$, insbesondere von 70 bis $200\,°C$ und einem Druck von 8 bis 2000 bar, insbesondere 20 bis 200 bar, umgesetzt werden und überschüssiges Ammoniak nach Beendigung der Umsetzung verdampft wird.

Hexaamminaluminiumjodidmonoammoniakat wird aus dem Umsetzungsprodukt erhalten, indem das überschüssige flüssige Ammoniak bei einer Temperatur von 10 bis $60\,°C$, insbesondere 15 bis $30\,°C$, gegen Normaldruck verdampft wird.

Hexaamminaluminiumjodid wird aus dem Umsetzungsprodukt erhalten, indem das überschüssige flüssige Ammoniak bei einer Temperatur von 65 bis $300\,°C$, insbesondere 80 bis $150\,°C$, gegen Normaldruck verdampft wird oder das überschüssige flüssige Ammoniak bei Raumtemperatur bis zu einem Unterdruck von $10^{-3}$ bar über die Gasphase abgesaugt wird oder das überschüssige flüssige Ammoniak bei einem Unterdruck von 0,3 bis 0,7 bar und einer Endtemperatur von 30 bis $50\,°C$ über die Gasphase abgesaugt wird.

Pentaamminaluminiumjodid wird aus dem Umsetzungsprodukt erhalten, indem das überschüssige Ammoniak bei einer Temperatur von 305 bis $380\,°C$, insbesondere 310 bis $330\,°C$, gegen Normaldruck verdampft wird.

In einer bevorzugten Ausführungsform wird den Reaktanten als Reaktionsbeschleuniger Chlor oder ein anorganisches Chlorid, vorzugsweise Aluminiumchlorid oder Ammoniumchlorid, in einer Menge von 0,05 bis 10 Gewichts%, insbesondere von 0,8 bis 1,2 Gewichts%, berechnet auf eingesetztes I, zudosiert.

Erfindungsgemäß wird bei den Reaktanten ein atomares Verhältnis Al : I von 1 : (2 bis 3,1) eingestellt.

Als Jodverbindung kann elementares Jod oder Ammoniumjodid eingesetzt werden.

Es hat sich gezeigt, daß bei einem atomaren Al-Überschuß gegenüber Jod das nicht umgesetzte Aluminium aus dem Fertigprodukt durch Sieben abgetrennt werden kann oder das nicht umgesetzte Aluminium und ungelöste Verunreinigungen aus der flüssigen Ammoniakphase durch Filtration oder Dekantation ausgeschleust werden können.

Die Amminsalze des Aluminiumjodids können in Kunstharzen und - lacken als aufblähbares Flammschutzmittel eingearbeitet werden.

Die folgenden Beispiele dienen zur Erläuterung der Erfindung, ohne daß darin eine Einschränkung zu sehen ist.

Beispiel 1

In einem emaillierten, heizbaren Rührautoklaven wurden unter Inertgas ($N_2$, Ar) 27 Teile Aluminiumschnitzel und 435 Teile Ammoniumjodid vorgelegt. Nach Evakuieren des Autoklaven wurden 561 Teile Ammoniak einkondensiert. Nach Verschließen des Autoklaven wurde er auf $75\,°C$ erhitzt und 99 Stunden bei dieser Temperatur belassen. Es stellte sich ein Druck von 35 bar ein. Anschließend wurde der Autoklav bei Raumtemperatur auf Normaldruck entspannt. Das Produkt hatte folgende Analyse:

$Al_{0,179}\,I_{0,573}\,N_{1,289}$

und entsprach damit der Formel

$$[\,Al(NH_3)_6\,]\,I_3(NH_3) + 0{,}201\,NH_4I$$

Bezogen auf das Aluminium betrug die Ausbeute 94 %.

Beispiel 2

In den Autoklaven wurden unter Inertgas ($N_2$, Ar) 27 Teile Aluminiumschnitzel und 290 Teile Ammoniumjodid vorgelegt. Nach Evakuieren wurden 408 Teile Ammoniak einkondensiert und der verschlossene Autoklav wurde auf 400°C erhitzt und 65 Stunden bei 400°C und 150 bar gehalten.

Der Autoklav wurde bei 25°C auf Normaldruck entspannt und das erhaltene Produkt über ein Sieb mit einer lichten Maschenweite von 0,20 mm vom überschüssigen Aluminium abgesiebt.

Der Umsatz bezogen auf Jod betrug 100 %.

Das Produkt hatte folgende Analyse:

$Al_{0,196} I_{0,568} N_{1,326}$

und entsprach damit folgender Formel

$$[ Al(NH_3)_6] I_3(NH_3) + 0,037\ Al$$

## Beispiel 3

Das Beispiel 2 wurde wiederholt mit der Änderung, daß jetzt 705 Teile Ammoniak einkondensiert wurden.

Nach 65 Stunden Reaktionsdauer bei 400°C wurde der Autoklav auf Raumtemperatur abgekühlt und das Reaktionsgemisch über ein Druckfilter aus dem Autoklaven entnommen. Das Ammoniak im Filtrat wurde bei Raumtemperatur unter Normaldruck verdampft. Es verblieben 524 Teile Kristalle, die folende Analyse hatten:

$Al_{0,187} I_{0,570} N_{1,318}$

Die Analysenwerte entsprachen damit der Formel

$$[ Al(NH_3)_6 ] I_3(NH_3) + 0,048\ NH_4I$$

Auf dem Druckfilter verblieben 0,44 Teile Rückstand, der zu 97 Gew.-% aus Aluminium bestand.

## Beispiel 4

In den Autoklaven wurden unter Inertgas (N₂, Ar) 27 Teile Aluminiumschnitzel, 435 Teile Ammoniumjodid und 4 Teile Ammoniumchlorid vorgelegt. Nach Evakuieren wurden 580 Teile Ammoniak einkondensiert. Nach Verschließen des Autoklaven wurde er auf 120°C erhitzt und 8 Stunden bei einem Druck von 90 bar gehalten. Danach wurde er bei 120°C gegen Normaldruck entspannt.

Das Produkt hatte folgende Analyse:

$Al_{0,181} I_{0,591} N_{1,156} Cl_{0,015}$

und entsprach damit der Formel

$$[Al(NH_3)_{6,04}] I_3 + 0,240\ NH_4I + 0,075\ NH_4Cl$$

Bezogen auf Aluminium betrug die Ausbeute 92 %.

## Beispiel 5

Beispiel 1 wurde wiederholt mit der Änderung, daß nach 90 Stunden der Autoklav 12 Stunden lang auf Raumtemperatur gehalten wurde. Danach wurde der Autoklav zunächst bei Raumtemperatur entspannt und schließlich im Ölpumpenvakuum bis 10⁻³ bar Ammoniak abgepumpt. Während des Ammoniakabpumpens wurde der Autoklav auf Raumtemperatur gehalten. Das Produkt hatte folgende Analyse:

$Al_{0,179} I_{0,597} N_{1,131}$

und entsprach damit der Formel

$$[Al(NH_3)_{5,98}] I_3 + 0,331\ NH_4I$$

## Beispiel 6

Beispiel 1 wurde wiederholt mit der Änderung, daß nach 90 Stunden der Autoklav auf 40°C abgekühlt und bei dieser Temperatur gegen Normaldruck entspannt wurde. Danach wurde der auf 40°C temperierte Autoklav bis auf einen Druck von 0,5 bar abgepumpt.

Das kristalline Produkt hatte folgende Analyse:

$Al_{0,179} I_{0,594} N_{1,132}$

und entsprach damit der Formel

$$[ Al(NH_3)_6] I_3 + 0,318\ NH_4I$$

## Beispiel 7

27 Teile Aluminiumschnitzel, 381 Teile Jod und 4 Teile Ammoniumchlorid wurden unter Inertgas (N₂, Ar) im Autoklaven vorgelegt und nach Evakuieren 540 Teile Ammoniak eindosiert. Der Autoklav wurde auf 320°C erhitzt und 7 Stunden bei dieser Temperatur und einem Druck von 180 bar gehalten. Anschließend wurde der Autoklav bei einer Temperatur von 320°C gegen Normaldruck entspannt.

Das Produkt hatte folgende Analyse:

$Al_{0,182} I_{0,612} N_{0,985}$

und entsprach damit der Formel

$$[ Al(NH_3)_{5,05}] I_3 + 0,363\ NH_4I$$

Bezogen auf Aluminium betrug die Ausbeute 89 %.

## Beispiel 8

25 Teile Aluminiumschnitzel, 10 Teile Aluminiumchlorid und 435 Teile Ammoniumjodid wurden unter Inertgas (N₂, Ar) im Autoklaven vorgelegt. Nach Evakuieren wurden 475 g Ammoniak einkondensiert. Der Autoklav wurde 7 Stunden lang bei 200°C unter einem Druck von 140 bar gehalten. Anschließend wurde der Autoklav auf 310°C erhitzt und gegen Normaldruck entspannt.
Das Produkt hatte folgende Analyse:
$Al_{0,186}\ I_{0,595}\ N_{1,025}\ Cl_{0,045}$
und entsprach damit der Formel

$$[\ Al(NH_3)_{5,07}]\ I_3\ +\ 0{,}199\ NH_4I\ +\ 0{,}242\ NH_4Cl$$

## Ansprüche

1. Verfahren zur Herstellung von Amminsalzen des Aluminiumjodids durch Umsetzung von Aluminium, einer Jodverbindung und Ammoniak, dadurch gekennzeichnet, daß die Reaktanten ohne Quecksilber als Katalysator in flüssiger Ammoniakphase bei einer Temperatur von 20 bis 600°C, insbesondere von 70 bis 200°C und einem Druck von 8 bis 2 000 bar, insbesondere 20 bis 200 bar, umgesetzt werden und überschüssiges Ammoniak nach Beendigung der Umsetzung verdampft wird.

2. Verfahren zur Herstellung von Hexaamminaluminiumjodidmonoammoniakat nach Anspruch 1, dadurch gekennzeichnet, daß das überschüssige flüssige Ammoniak bei einer Temperatur von 10 bis 60°C, insbesondere 15 bis 30°C, gegen Normaldruck verdampft wird.

3. Verfahren zur Herstellung von Hexaamminaluminiumjodid nach Anspruch 1, dadurch gekennzeichnet, daß das überschüssige flüssige Ammoniak bei einer Temperatur von 65 bis 300°C, insbesondere 80 bis 150°C, gegen Normaldruck verdampft wird.

4. Verfahren nach einem der Ansprüche 1 oder 3, dadurch gekennzeichnet, daß das überschüssige flüssige Ammoniak bei Raumtemperatur bis zu einem Unterdruck von $10^{-3}$ bar über die Gasphase abgesaugt wird.

5. Verfahren nach einem der Ansprüche 1 oder 3, dadurch gekennzeichnet, daß das überschüssige flüssige Ammoniak bei einem Unterdruck von 0,3 bis 0,7 bar und einer Endtemperatur von 30 bis 50°C über die Gasphase abgesaugt wird.

6. Verfahren zur Herstellung von Pentaamminaluminiumjodid nach Anspruch 1, dadurch gekennzeichnet, daß das überschüssige Ammoniak bei einer Temperatur von 305 bis 380°C, insbesondere 310 bis 330°C, gegen Normaldruck verdampft wird.

7. Verfahren nach einem der Ansprüche 1 bis 6, dadurch gekennzeichnet, daß den Reaktanten als Reaktionsbeschleuniger Chlor oder ein anorganisches Chlorid, vorzugsweise Aluminiumchlorid oder Ammoniumchlorid, in einer Menge von 0,05 bis 10 Gewichts%, insbesondere von 0,8 bis 1,2 Gewichts%, bezogen auf eingesetztes Jod, zudosiert wird.

8. Verfahren nach einem der Ansprüche 1 bis 7, dadurch gekennzeichnet, daß ein atomares Verhältnis Al : I von 1 : (2 bis 3,1) eingestellt wird.

9. Verfahren nach einem der Ansprüche 1 bis 8, dadurch gekennzeichnet, daß als Jodverbindung elementares Jod oder Ammoniumjodid eingesetzt wird.

10. Verfahren nach einem der Ansprüche 1 bis 9, dadurch gekennzeichnet, daß bei einem atomaren Al-Überschuß gegenüber Jod das nicht umgesetzte Aluminium aus dem Fertigprodukt durch Sieben abgetrennt wird.

11. Verfahren nach einem der Ansprüche 1 bis 9, dadurch gekennzeichnet, daß bei einem atomaren Al-Überschuß gegenüber Jod das nicht umgesetzte Aluminium und ungelöste Verunreinigungen aus der flüssigen Ammoniakphase durch Filtration oder Dekantation ausgeschleust werden.